# EUROPÄISCHE PATENTSCHRIFT

(11) **EP 1 126 764 B1**
(45) Veröffentlichungstag und Bekanntmachung des Hinweises auf die Patenterteilung: **17.12.2003**
(21) Anmeldenummer: 98959824.8
(22) Anmeldetag: 02.11.1998
(51) Int. Cl.: A44B 18/00, B29C 43/22

(54) **VERFAHREN ZUR HERSTELLUNG EINES HAFTVERSCHLUSSTEILES**
METHOD FOR PRODUCING AN ADHESIVE CLOSING ELEMENT
PROCEDE POUR PRODUIRE UN ELEMENT DE FERMETURE AUTO-AGRIPPANTE

(43) Veröffentlichungstag der Anmeldung: 29.08.2001
(73) Patentinhaber: Gottlieb Binder GmbH & Co., 71088 Holzgerlingen (DE)
(72) Erfinder: TUMA, Jan, D-12681 Berlin (DE)
(74) Vertreter: Bartels, Martin Erich Arthur
(86) Internationale Anmeldenummer: EP9806929
(87) Internationale Veröffentlichungsnummer: WO00025620

(56) Entgegenhaltungen:
- EP-A- 0 575 828
- WO-A-95/01863
- DE-A- 19 646 318
- DE-C- 19 730 217

## Beschreibung

Die Erfindung bezieht sich auf ein Verfahren zur Herstellung eines Haftverschlußteiies mit einer Vielzahl von einstückig mit einem Träger ausgebildeten Verhakungselementen in Form von endseitige Verdickungen aufweisenden Stengeln, bei dem ein thermoplastischer Kunststoff in plastischem oder flüssigem Zustand dem Spalt zwischen beweglichen Werkzeugen zugeführt wird und diese so angetrieben werden, daß der Träger im Spalt gebildet und in einer Transportrichtung gefördert wird, wobei durch beidseits am Spalt wirksame formgebende Elemente an beiden Seiten des Trägers Verhakungselemente gebildet werden.

Ein Verfahren dieser Art ist bereits aus der Veröffentlichung WO 95/01863 bekannt. Die Durchführung dieses Verfahrens gestaltet sich in nachteiliger Weise aufwendig, wenn fein strukturierte Verhakungselemente in großer Anzahl, die am Träger in entsprechend hoher Packungsdichte angeordnet sind, hergestellt werden sollen. Hierbei ist die Herstellung der die Verhakungsefemente ausbildenden, formgebenden Elemente äußerst kostenaufwendig.

Der Erfindung liegt die Aufgabe zugrunde, ein Verfahren aufzuzeigen, das eine demgegenüber kostengünstigere Herstellung von Haftverschlußteilen mit fein strukturierten, in hoher Packungsdichte angeordneten Verhakungselementen ermöglicht.

Bei einem Verfahren der eingangs genannten Art ist diese Aufgabe erfindungsgemäß dadurch gelöst, daß als formgebende Elemente durchgehende Hohlräume eines ersten Siebes und eines an der Innenseite des ersten Siebes angeordneten zweiten Siebes verwendet und die Verhakungselemente dadurch gebildet werden, daß der thermoplastische Kunststoff in den Hohlräumen der Siebe zumindest teilweise erhärtet.

Die Ausbildung der Verhakungselemente unter Anwendung zweier aneinander liegender Siebe eröffnet die vorteilhafte Möglichkeit, sehr feine Verhakungselemente, wie sie bei den sogenannten Mikro-Haftverschlußelementen (siehe DE 196 46 318 A1) vorgesehen sind, mit geringem Aufwand herzustellen. Das am äußeren Sieb anliegende, zweite innere Sieb dient aus zusätzliches formgebendes Element beim Formen der die Verhakungselemente bildenden Stengel, und zwar was deren endseitige Gestaltung anbelangt.

Hierbei ergibt sich der Vorteil, daß an die Geometrie der Öffnungen des Siebes keine besonderen Anforderungen zu stellen sind, weil die Form und Beschaffenheit des verdickten, endseitigen Bereichs der vom eingefüllten Kunststoff gebildeten Stengel ausschließlich durch die Hohlräume des inneren Siebes erfolgt, deren Querschnitt etwas größer gewählt ist als der Querschnitt der Hohlräume des äußeren Siebes. Der Querschnittsunterschied ist so gewählt, daß das Ausziehen der Stengel mit den durch Hohlräume des inneren Siebes gebildeten endseitigen Verdickungen nach Erhärten oder teilweisem Erhärten des Kunststoffes ohne Schwierigkeiten erfolgen kann. Eine aufwendige Bearbeitung zur Bildung abgerundeter Ränder ist bei den Hohlräumen des inneren Siebes, wie auch bei den Hohlräumen des äußeren Siebes nicht erforderlich.

Das erfindungsgemäße Verfahren kann so durchgeführt werden, daß die Verhakungswirkung des Haftverschlußteiles an beiden Seiten zumindest gleichartig ist. Hierfür können die Verhakungselemente beider Seiten gleichartig ausgebildet werden, sowohl was ihre Packungsdichte als auch ihre Geometrie und Abmessungen anbelangt. Ein derartiges Haftverschlußteil eignet sich insbesondere zur Bildung einer beidseitigen, bleibenden Festverhakung.

Haftverschlußteile, die durch verschiedenartige Packungsdichten, Formgebungen und/oder Abmessungen der Verhakungselemente unterschiedliche Hafteigenschaften an beiden Seiten aufweisen, lassen sich andererseits bevorzugt bei Anwendungen einsetzen, bei denen ein gewolltes Lösen der Verhakung an nur einer Seite erfolgen soll. Dies ist beispielsweise bei der Anwendung bei Teppich-Verlegesystemen von Vorteil.

Nachfolgend ist die Erfindung anhand der Zeichnungen näher erläutert. Es zeigen:
- Fig. 1: eine stark schematisch vereinfacht und teils geschnitten gezeichnete Seitenansicht einer Vorrichtung zur Durchführung des erfindungsgemäßen Verfahrens;
- Fig. 2: eine perspektivische Darstellung zweier ineinandergeschobener Siebe mit zur Verdeutlichung in übertriebener Größe bereichsweise dargestellten, durch die Sieböffnungen gebildeten Hohlräumen;
- Fig. 3: einen schematisch vereinfachten Längsschnitt des Abschnitts einer Formwalze mit ineinandergeschobenen Sieben gemäß Fig. 2 und
- Fig. 3a bis 3c: in vergrößertem Maßstab gezeichnete Querschnitte verschiedener Formen von durch die Sieböffnungen der ineinandergeschobenen Siebe gebildeten Hohlräume.

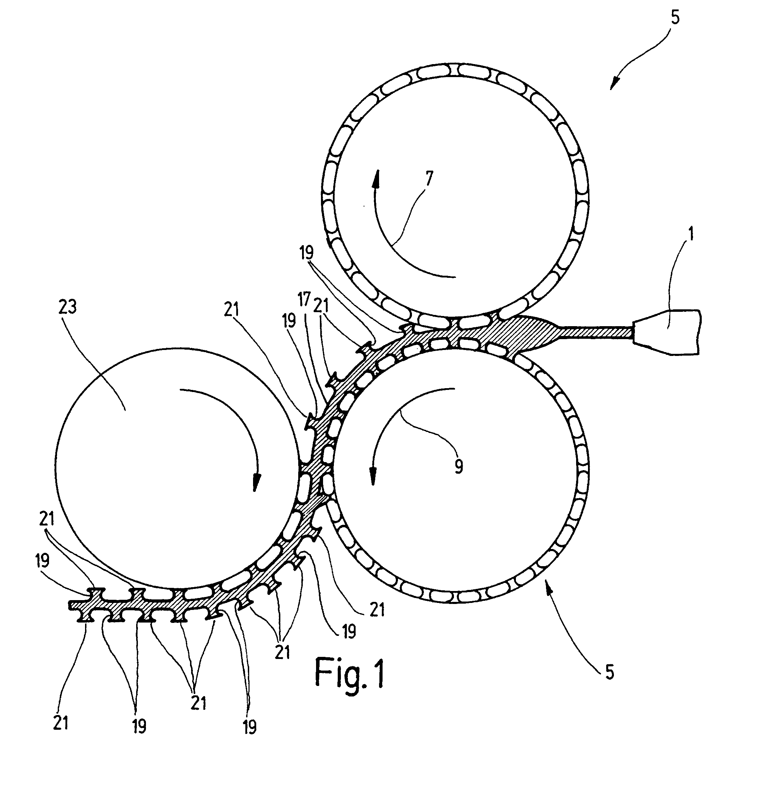

Fig. 1 zeigt in schematischer Darstellung Teile einer Vorrichtung zum Durchführen des erfindungsgemäßen Verfahrens mit einem Extruderkopf 1 als Zuführeinrichtung für in plastischem oder flüssigem Zustand befindlichen thermoplastischen Kunststoff, der als ein Band, dessen Breite derjenigen des herzustellenden Haftverschlußteiles entspricht, dem Spalt zwischen beweglichen Formwerkzeugen zugeführt wird. Bei den Formwerkzeugen handelt es sich um je eine als Ganzes jeweils mit 5 bezeichnete Formwalze. Beide Formwalzen 5 sind in den in Fig. 1 mit Bogenpfeilen 7 und 9 angegebenen Drehrichtungen angetrieben, so daß zwischen ihnen ein Förderspalt gebildet wird, durch den das Kunststoffband in Transportrichtung gefördert wird, während gleichzeitig im Spalt das Kunststoffband zum Träger 17 des Haftverschlußteiles geformt wird und der Träger 17 an seinen beiden an den Formwalzen 5 anliegenden Seiten durch die formgebenden Elemente der Formwalzen 5 die zur Bildung von Verhakungselementen erforderliche Formgebung erhält.

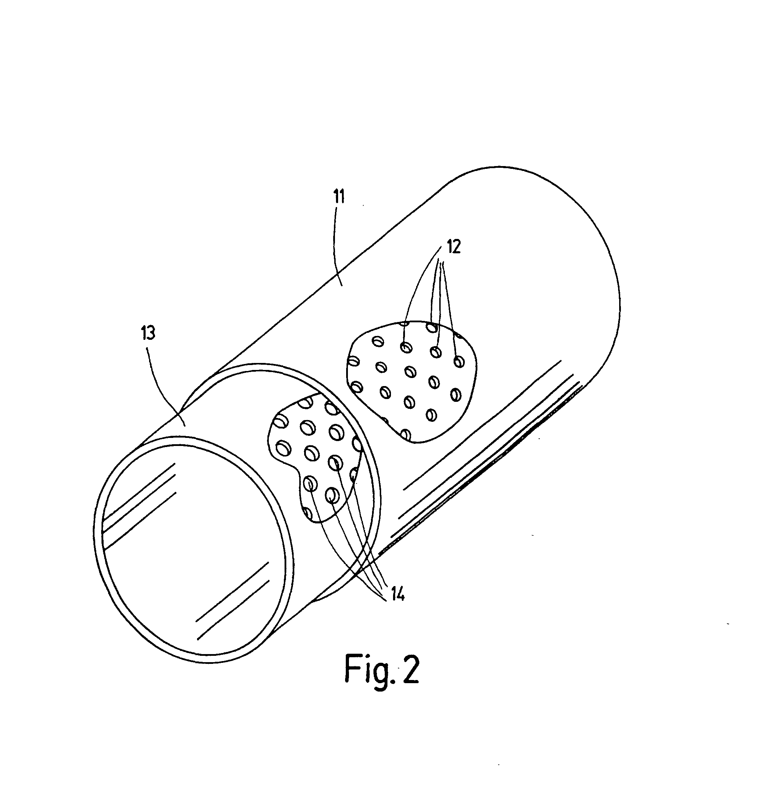

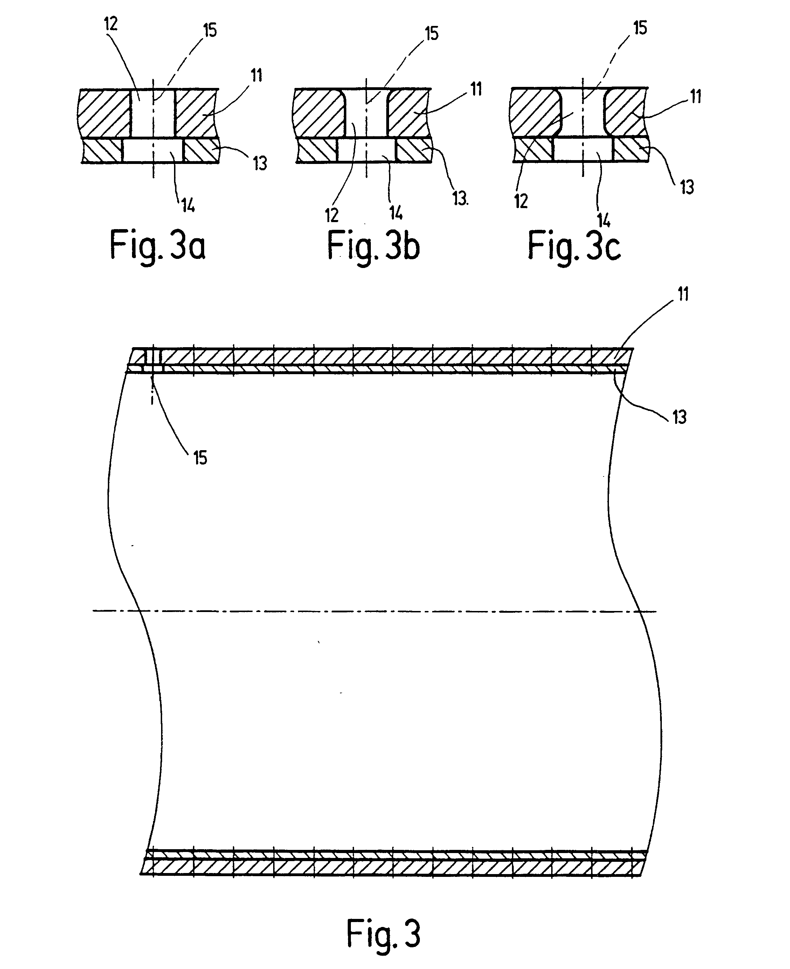

Zu diesem Zweck weisen beide Formwalzen 5 am Umfang je zwei formgebende Elemente in Form je eines Siebes auf, nämlich eines äußeren Siebes 11 und eines inneren Siebes 13, die aneinanderliegen, siehe Fig. 2. Wie insbesondere aus Fig. 3 zu ersehen ist, sind die Siebe 11 und 13 so ineinandergesteckt, daß die durch die Sieböffnungen von äußerem Sieb 11 und innerem Sieb 13 gebildeten Hohlräume 12 bzw. 14 mit gemeinsamer Achse 15 miteinander fluchten, siehe insbesondere Fig. 3a.

Wie letztere Figur besonders deutlich erkennen läßt, ist die Dicke des äußeren Siebes 11 größer als diejenige des inneren Siebes 13, dessen Hohlräume 14 wiederum im Querschnitt größer sind als die Hohlräume 12 des äußeren Siebes 11. Aufgrund dieser Konfiguration wird der im Spalt zwischen den Formwalzen 5 in die Hohlräume 12 und 14 eingedrückte Kunststoff so geformt, daß am Träger 17 beidseits vorspringende Stengel 19 mit verdickten Enden 21 gebildet werden. Der Unterschied der Querschnittsgrößen der Hohlräume 12 und 14 ist so gewählt, daß die Verbreiterung an den Enden 21 lediglich so groß ist, daß nach teilweisem oder vollständigem Erhärten des Kunststoffes das Ausziehen der Stengel 19 aus den Hohlräumen 12, 14 sicher erfolgen kann, wenn der Träger 17 über eine Ausziehwalze 23 von der unteren Formwalze 5 abgeführt wird.

Die Fig. 3a bis 3c zeigen, daß die Form der die Hohlräume 12 und 14 bildenden Sieböffnungen verschiedenartig gewählt sein kann, insbesondere sind, wie Fig. 3a zeigt, keine randseitigen Abrundungen erforderlich. Solche können jedoch, wie Fig. 3b und 3c zeigen, am äußeren Sieb 11 an der Außenseite oder an beiden Seiten vorgesehen sein. Auch das innere Sieb 13 könnte entsprechende Abrundungen aufweisen. Auch könnte, abweichend von den Darstellungen in Fig. 3, die Dicke der Siebe 11 und 13 gleich groß sein. Eine genaue Positionierung der Siebe 11 und 13 relativ zueinander kann vor dem Aufziehen auf die gegebenenfalls gekühlte Formwalze 5 durch Verkleben erfolgen, beispielsweise mittels eines Zweikomponentenklebers.

## Patentansprüche

1. Verfahren zur Herstellung eines Haftverschlußteiles mit einer Vielzahl von einstückig mit einem Träger (17) ausgebildeten Verhakungselementen in Form von endseitige Verdickungen (21) aufweisenden Stengeln (19), bei dem ein thermoplastischer Kunststoff in plastischem oder flüssigem Zustand dem Spalt zwischen beweglichen Werkzeugen (5) zugeführt wird und diese so angetrieben werden, daß der Träger (17) im Spalt gebildet und in einer Transportrichtung gefördert wird, wobei durch beidseits am Spalt wirksame formgebende Elemente (12, 14) an beiden Seiten des Trägers (17) Verhakungselemente gebildet werden, **dadurch gekennzeichnet, daß** als formgebende Elemente durchgehende Hohlräume (12, 14) eines ersten Siebes (11) und eines an der Innenseite des ersten Siebes (11) angeordneten zweiten Siebes (13) verwendet und die Verhakungselemente dadurch gebildet werden, daß der thermoplastische Kunststoff in den Hohlräumen (12, 14) der Siebe zumindest teilweise erhärtet.

2. Verfahren nach Anspruch 1, **dadurch gekennzeichnet, daß** je eine die Siebe (11, 13) aufweisende Formwalze (5) verwendet und diese für einen zwischen ihnen gebildeten Förderspalt angetrieben werden, durch den der Träger (17) in Transportrichtung bewegt wird.

3. Verfahren nach Anspruch 2, **dadurch gekennzeichnet, daß** die Formwalzen (5) temperiert werden.

4. Verfahren nach einem der Ansprüche 1 bis 3, **dadurch gekennzeichnet, daß** ein inneres Sieb (13) mit gegenüber dem äußeren Sieb (11) vergrößerten Sieböffnungen (14) verwendet wird.

5. Verfahren nach Anspruch 4, **dadurch gekennzeichnet, daß** Siebe (11, 13) mit Sieböffnungen unterschiedlicher und/oder von der Kreisform abweichender Querschnittsform verwendet werden.

6. Verfahren nach einem der Ansprüche 1 bis 5, **dadurch gekennzeichnet, daß** Siebe (11, 13) unterschiedlicher Dicke verwendet werden, vorzugsweise ein inneres Sieb (13) mit einer gegenüber dem äußeren Sieb (11) verringerten Dicke verwendet wird.

7. Verfahren nach einem der Ansprüche 1 bis 6, **dadurch gekennzeichnet, daß** nach dem Entformen der mittels der formgebenden Elemente gebildeten Stengel (19) deren Enden zur Bildung der endseitigen Verdickungen (21) verformt werden.

8. Verfahren nach einem der Ansprüche 1 bis 7, **dadurch gekennzeichnet, daß** als thermoplastischer Kunststoff Polyolefine oder Blends von Polyamiden verwendet werden.

## Claims

1. Method for producing a fastening closure part having a plurality of hooking elements, which are formed integrally with a carrier (17) and which are in the form of stems (19) having end thickenings (21), wherein a thermoplastic plastics material is supplied in a plastic or fluid state to the aperture between movable tools (5) which are driven in such a manner that the carrier (17) is formed in the aperture and is conveyed in a transport direction, hooking elements being formed on both sides of the carrier (17) by means of shaping elements (12, 14) acting at both sides of the aperture, **characterised in that** continuous hollow spaces (12, 14) of a first sieve (11) and a second sieve (13), which is arranged inside the first sieve (11), are used as the shaping elements and the hooking elements are formed by the thermoplastic plastics material at least partially setting in the hollow spaces (12, 14) of the sieves.

2. Method according to claim 1, **characterised in that** one shaping roller (5) having the sieves (11, 13) is used in each case and the shaping rollers (5) are driven in order to produce a conveying aperture which is formed therebetween and through which the carrier (17) is moved in the transport direction.

3. Method according to claim 2, **characterised in that** the shaping rollers (5) have a predetermined temperature.

4. Method according to any one of claims 1 to 3, **characterised in that** an inner sieve (13) having sieve openings (14) which are larger than those of the outer sieve (11) is used.

5. Method according to claim 4, **characterised in that** sieves (11, 13) having sieve openings of different cross-sectional form and/or of non-circular cross-sectional form are used.

6. Method according to any one of claims 1 to 5, **characterised in that** sieves (11, 13) of different thickness are used and an inner sieve (13) whose thickness is less than that of the outer sieve (11) is preferably used.

7. Method according to any one of claims 1 to 6, **characterised in that**, after the stems (19) formed by the shaping elements have been removed from the mould, the ends thereof are shaped to form the end thickenings (21).

8. Method according to any one of claims 1 to 7, **characterised in that** polyolefines or blends of polyamides are used as the thermoplastic plastics material.

## Revendications

1. Procédé de fabrication d'une pièce de fermeture adhésive ayant une pluralité d'éléments de verrouillage réalisés d'une seule pièce avec un support (17) sous la forme de tiges (19) présentant des épaississements du côté de l'extrémité (21), dans lequel une matière synthétique thermoplastique à l'état plastique ou liquide est amenée dans la fente entre des outils mobiles (5) et ceux-ci sont entraînés de telle sorte que le support (17) est formé dans la fente et acheminé dans une direction de transport, où des éléments de verrouillage sont formés sur les deux côtés du support (17) par des éléments de façonnage (12, 14) agissant sur les deux côtés de la fente, **caractérisé en ce que** des espaces creux traversants (12, 14) d'un premier filtre (11) et d'un deuxième filtre (13) agencé sur le côté intérieur du premier filtre (11) sont utilisés comme éléments de façonnage et **en ce que** les éléments de verrouillage sont formés **en ce que** la matière synthétique thermoplastique durcit au moins partiellement dans les espaces creux (12, 14) des filtres.

2. Procédé selon la revendication 1, **caractérisé en ce qu'**un cylindre de forme (5) présentant les filtres (11, 13) est à chaque fois utilisé et **en ce que** ceux-ci sont entraînés pour une fente de transport formée entre eux, à travers laquelle le support (17) est déplacé dans la direction de transport.

3. Procédé selon la revendication 2, **caractérisé en ce que** les cylindres de forme (5) sont mis en équilibre de température.

4. Procédé selon l' une quelconque des revendications 1 à 3, **caractérisé en ce qu'**un filtre intérieur (13) ayant des ouvertures de filtre (14) agrandies par rapport au filtre extérieur (11) est utilisé.

5. Procédé selon la revendication 4, **caractérisé en ce que** des filtres (11, 13) ayant des ouvertures de filtre de formes de section différentes et/ou s'écartant de la forme circulaire sont utilisés.

6. Procédé selon l'une quelconque des revendications 1 à 5, **caractérisé en ce que** des filtres (11, 13) d'épaisseurs différentes sont utilisés, et **en ce que**, de préférence, un filtre intérieur (13) ayant une épaisseur amoindrie par rapport au filtre extérieur (11) est utilisé.

7. Procédé selon l'une quelconque des revendications 1 à 6, **caractérisé en ce que**, après le démoulage des tiges (19) formées au moyen des éléments de façonnage, leurs extrémités sont déformées afin de former les épaississements d'extrémité (21).

8. Procédé selon l'une quelconque des revendications 1 à 7, **caractérisé en ce que** de la polyoléfine ou des composés de polyamides sont utilisés comme matière synthétique thermoplastique.
